# EUROPEAN PATENT APPLICATION

(11) **EP 1 160 127 A2**
(43) Date of publication of application: **05.12.2001**
(21) Application number: 01112692.7
(22) Date of filing: 25.05.2001
(51) Int. Cl.: B60Q 1/00, B60Q 1/26

(54) **An illumination device for a motor vehicle**

(30) Priority: 02.06.2000 IT TO000095 U
(71) Applicant: Fioravanti S.r.l., 10121 Torino (IT)
(72) Inventor: Fioravanti, Leonardo, 10024 Moncalieri (Torino) (IT)
(74) Representative: Jacobacci, Filippo

(57) **Abstract**

An illumination device for motor vehicles includes four illuminating devices (2), for mounting at each of the four corners of the vehicle body. Each illumination device (2) has at least one axis of symmetry (A-A) and the said four illuminating devices (2) are shaped identically. Each of the said illuminating devices (2) contains four optical devices (5a, 5b, 5c, 5d) operable to act, at the front of the vehicle, as turn indicators and side lights, headlights, dipped headlights and side repeater turn indicator light, and, at the rear of the vehicle, as side light and turn indicator light, brake light, backing light and fog lamp.

## Description

The present invention relates to an illumination device for use on a motor vehicle.

European patent N. 0 836 558 refers to use on a motor vehicle of two rear illumination devices which extend vertically and each have a vertical axis of symmetry, so that the two rear illumination devices are identical.

This arrangement, however, does not reduce the number of components required to manufacture rear illumination devices and does not, therefore, reduce manufacturing costs.

The object of the present invention is to reduce the cost of manufacturing illumination devices for use not only at the rear of a motor vehicle but also at the front.

This object is achieved according to the present invention by providing an illumination device having the characteristics claimed in Claim 1.

Further characteristics of the invention form the subject of Claims 2 to 7.

The invention will now be described with reference to the appended drawings, provided purely by way of non-limitative example and in which:
Figure 1 is a perspective view of a motor vehicle fitted with front and rear illumination devices of the invention;
Figure 2 is a plan view of an illumination device;
Figure 3 is a side view seen in the direction of the arrow A of Figure 2;
Figure 4 is a front view seen in the direction of the arrow B of Figure 2; and
Figure 5 is an exploded perspective view of the illumination device shown in Figures 2 to 4.

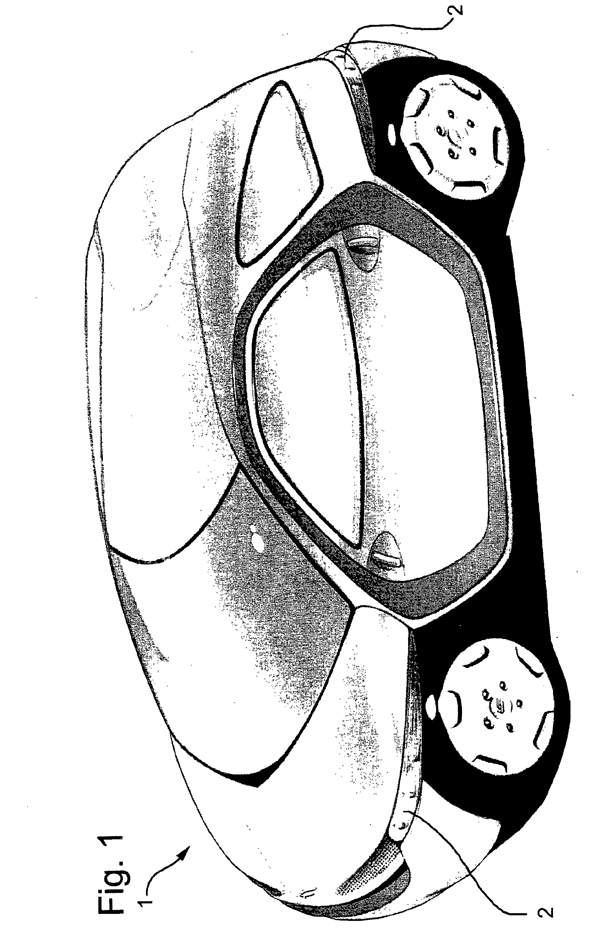

In Figure 1, a motor vehicle is indicated 1 which has a body configured so that, in an horizontal cross section, it is curved substantially identically at each of its four corners, that is in the two areas connecting the front portion to the right and left sides and in the two areas connecting the rear portion to the said two sides.

At each of the aforesaid four corners, the body of the motor vehicle 1 has a shallow, horizontal, curved groove. Each of the said four grooves contains an illumination device 2, shaped substantially to match the groove and having a horizontal axis of symmetry, so that that the four illumination devices 2 are all substantially the same.

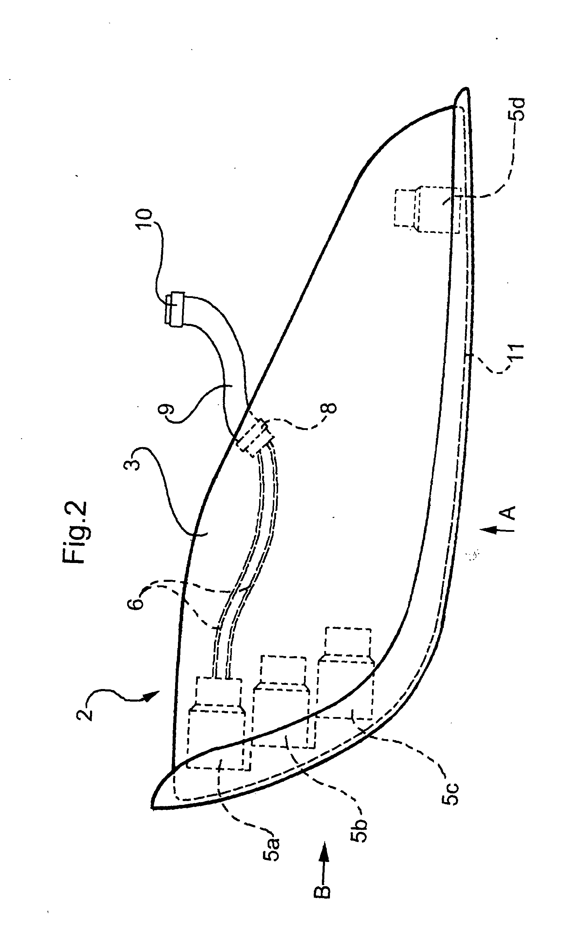

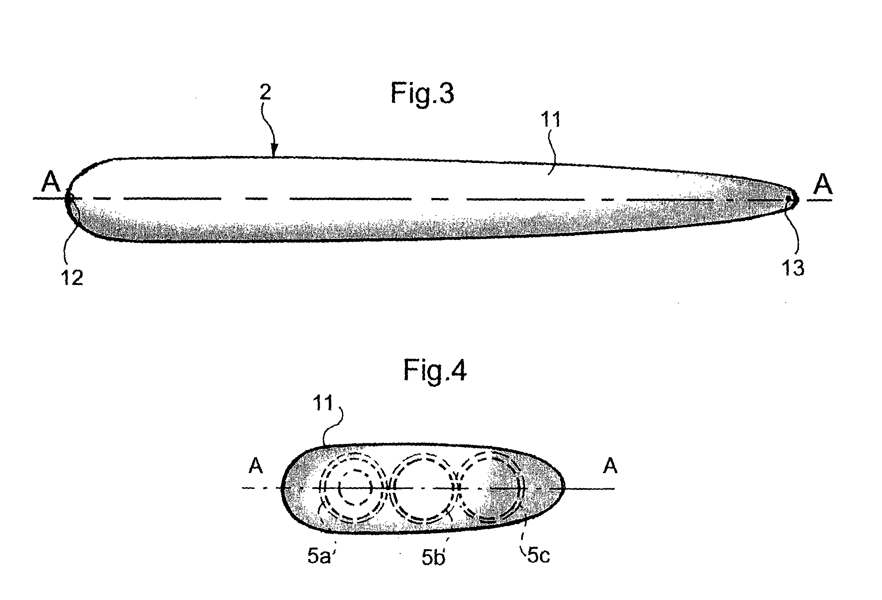

As shown in Figures 2 to 5, each of the aforesaid illumination devices 2 includes a body 3 of a plastics material with a horizontal axis of symmetry A-A.

The body 3 has three seats 4a, 4b, 4c at the front and one seat 4d at the far end of a side portion.

The seats 4a, 4b, 4c and 4d are provided for housing respective optical devices indicated 5a, 5b, 5c and 5d.

Each of the aforesaid optical devices is manufactured in a manner known per se and contains a lamp (not shown) fed by two conductors 6 which each have a connecting plate 7 for connection to a connector 8 contained in the body 3. By means of a multiple conductor 9, the connector 8 is connected in turn to an external connector 10 which can be connected to the electrical system of the motor vehicle.

Either at the front or at the rear of the vehicle, the optical device 5a acts as turn indicator and sidelight.

The optical device 5b acts as a dipped headlight at the front of the vehicle or as a brake light at the rear of the vehicle.

The optical device 5c acts as a headlight at the front of the vehicle or, at the rear of the vehicle, either as a backing light or as a rear fog lamp.

The optical device 5d acts - only at the front of the vehicle - as a repeater turn indicator lamp.

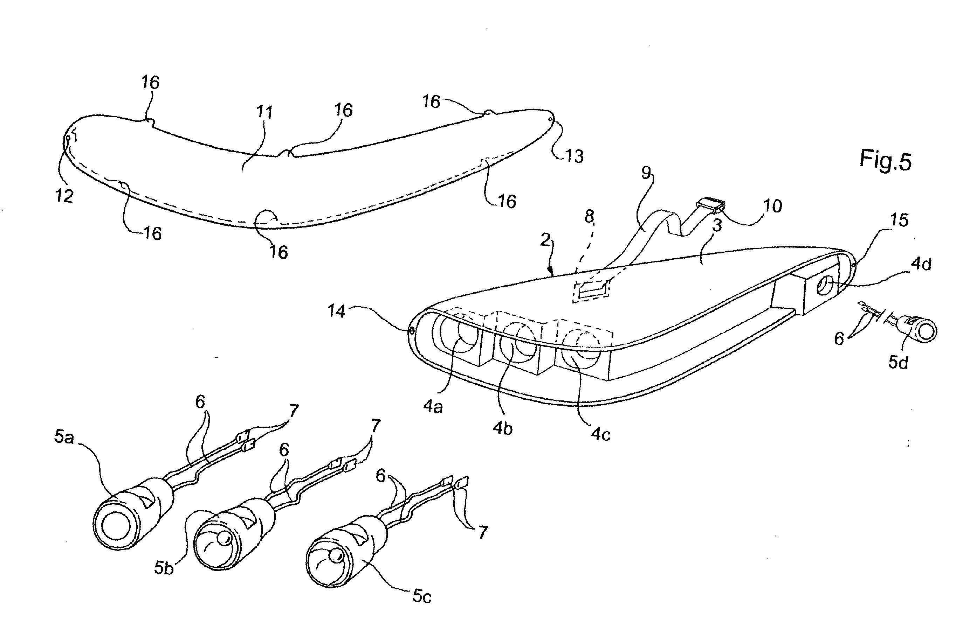

The portion of the body 3 facing outwardly of the vehicle is covered by a transparent element 11 with holes 12 and 13, as shown in Figure 5, for fixing it to the body 3 by means of known means engaging corresponding holes 14 and 15 of the body 3.

The body 3 also has side portions 16 for fixing it to the body of the vehicle with known means.

If the bulbs in the aforesaid optical devices are of a conventional type, it is necessary in the optical devices 5b and 5c to use different bulbs according to whether the optical device is to be fitted at the front or at the rear or, alternatively, to use a transparent cover 11 at the rear of a different colour from that used at the front.

If neon lights are used, on the other hand, it is possible to differentiate the colour of the front devices from that of the rear simply by differentiating the electrical current supplied to the lights. In this case, the four illumination devices 2 will all be made up of identical components.

For the sake of convenience, the various optical devices can use the same bulbs for functions requiring less power as for those requiring greater power, simply by suitably adjusting the power supply circuit to reduce the intensity of the current supplied to the bulbs requiring less power.

In addition to the advantage provided by using four substantially identical illumination devices in a motor vehicle, the present invention provides the additional advantage of offering a backing light which is more powerful than conventional backing lights.

## Claims

1. An illumination device for a motor vehicle, **characterised in that** it includes four illumination devices (2) which are the same shape and each have at least one axis of symmetry; each of the four said illumination devices (2) including four optical devices (5a, 5b, 5c and 5d) operable to carry out the following functions:
a) at the front of the vehicle:
- turn indicator and side light,
- headlight
- dipped headlight,
- lateral repeater turn indicator light
b) at the rear of the vehicle:
- turn indicator and side light,
- brake light
- backing light or fog lamp.

2. An illumination device according to Claim 1, for use in a motor vehicle with a body which has substantially identical outlines in an horizontal cross section at its four corners, **characterised in that** it includes four illumination devices (2) which can be mounted in four corresponding shallow, curved horizontal seats, formed in the four said corners of the vehicle body, the outline of each of the said illumination devices (2) substantially matching that of the aforesaid seat and having at least one axis of symmetry (A-A).

3. A device according to Claim 1, **characterised in that** each illumination device (2) includes a body (3) with seats (4a, 4b, 4c, 4d) for the said four optical devices (5a, 5b, 5c, 5d), means (6, 7, 8, 9, 10) for connecting the said four optical devices to the electrical supply of the motor vehicle and a transparent cover element (11) covering the portions of the optical devices facing outwardly with respect to the body (3).

4. A device according to Claim 1, **characterised in that** the illuminating devices (2) used at the rear of the vehicle differ from those used at the front only because of the different colour of the respective transparent cover elements (11).

5. A device according to Claim 1, **characterised in that** the illuminating devices (2) used at the rear of the motor vehicle differ from those used at the front only because the respective optical devices are differently coloured.

6. A device according to Claim 1, **characterised in that** the illuminating devices (2) fitted at the front and at the rear of the vehicle all have identical transparent, colourless bodies (11) and identical bulbs, the colour of the said bulbs being variable in dependence on the characteristics of their electrical power supply.

7. A device according to Claim 6, **characterised in that** the bulbs fitted in the optical devices (5a, 5b, 5c, 5d) arranged at the front and at the rear of the vehicle are identical neon bulbs and the characteristics of the power supplied to each bulb are such that each lamp takes on the colour suited to its function.

8. A device according to Claim 1, **characterised in that** the bulbs in the optical devices (5a, 5b, 5c, 5d) which require less power in order to fulfil their function are the same as those which require greater power, and **in that** the intensity of the power supplied to the bulbs requiring less power is reduced, in the electric power supply circuit, compared to the power supplied to the bulbs requiring greater power.
